# EUROPÄISCHE PATENTSCHRIFT

(11) **EP 0 898 538 B1**
(45) Veröffentlichungstag und Bekanntmachung des Hinweises auf die Patenterteilung: **03.11.1999**
(21) Anmeldenummer: 97904333.8
(22) Anmeldetag: 25.02.1997
(51) Int. Cl.: B62D 1/04

(54) **VERFAHREN ZUR HERSTELLUNG VON LENKRÄDERN MIT HOLZSEGMENTEN**
METHOD OF PRODUCING STEERING WHEELS WITH WOODEN SEGMENTS
PROCEDE DE PRODUCTION DE VOLANTS A SEGMENTS EN BOIS

(30) Priorität: 13.05.1996 CH 121696
(43) Veröffentlichungstag der Anmeldung: 03.03.1999
(73) Patentinhaber: Carrier, Rainer, 6862 Rancate (CH)
(72) Erfinder: Carrier, Rainer, 6862 Rancate (CH)
(86) Internationale Anmeldenummer: CH9700071
(87) Internationale Veröffentlichungsnummer: WO9743164

(56) Entgegenhaltungen:
- US-A- 3 331 260
- US-A- 5 009 733
- PATENT ABSTRACTS OF JAPAN vol. 016, no. 576 (M-1345), 16.Dezember 1992 & JP 04 224462 A (YAMAHA CORP), 13.August 1992,

## Beschreibung

Dieses Verfahren dient zur Herstellung Von Echtholz-Segmenten für die Lenkräder von Kraftfahrzeugen, Booten und vergleichbaren Anwendungsgebieten.

Bei dem heute allgemein angewandten Verfahren werden Furnierstreifen von ca. 1,5 mm Dicke mit Nassleim beauftragt und auf einen Stahlkern, welcher etwa den Innendurchmesser des Lenkradkranzes aufweist, aufgewickelt.

Der Nachteil bei diesem, z.B. aus DE-A-3922664 bekannten Verfahren besteht darin, dass weder der zur Verleimung notwendige Druck, noch die Verteilung der mit dem Leim eingebrachten Feuchtigkeit, kontrolliert werden kann. Beim Auftrennen des so gefertigten Holzringes zu Segmenten treten deshalb unkontrollierbare Verzugserscheinungen auf.

Mit dem Verfahren gemäß Anspruch 1 werden diese Fehler vermieden. Weitere Ansgestaltungen der Erfindung sind in dem abhängigen Ansprüchen 2 bis 4 engegeben.

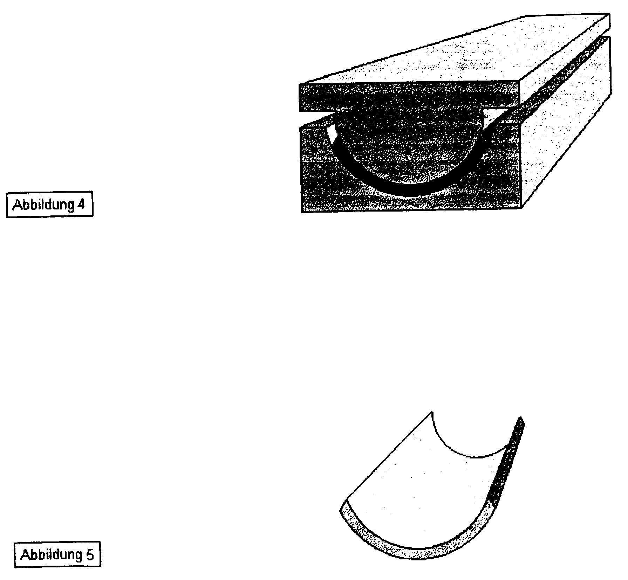

Der Produktionsablauf beginnt mit dem Verpressen einer vorbestimmten Anzahl von Furnierlagen und Leimfolie in einer, dem gewünschten Radius entsprechenden Stahlform, wobei während des Produktionsablaufes alle qualitativ relevanten Parameter Kontrolliert werden können (Abb. 4 und 5).

Die Dicke der Furniere beträgt, technisch und wirtschaftlich bedingt, 0,5 bis 2,0 mm.

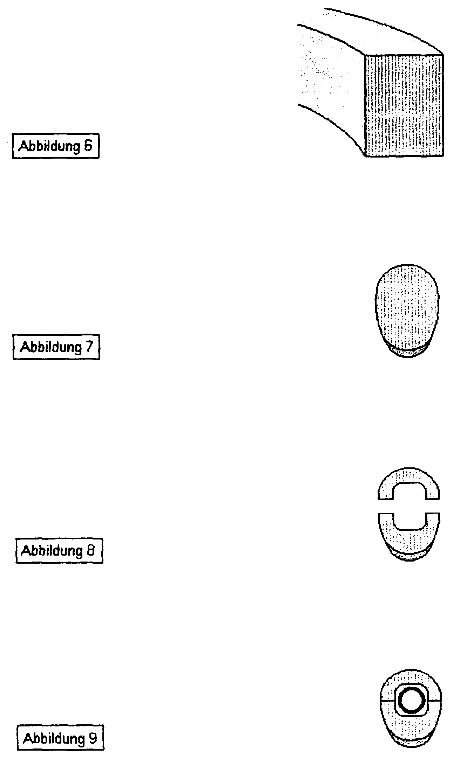

Diese Segmente werden dann zu Segmentstreifen (Abb. 6) aufgetrennt, welche in nachfolgenden Arbeitsgängen geteilt und formgefräst werden (Abb. 7 und 8).

Die so gefertigten Segmenthälften werden in speziellen Vorrichtungen auf den Lenkradkern aufgeleimt und danach geschliffen und lackiert (Abb. 9).

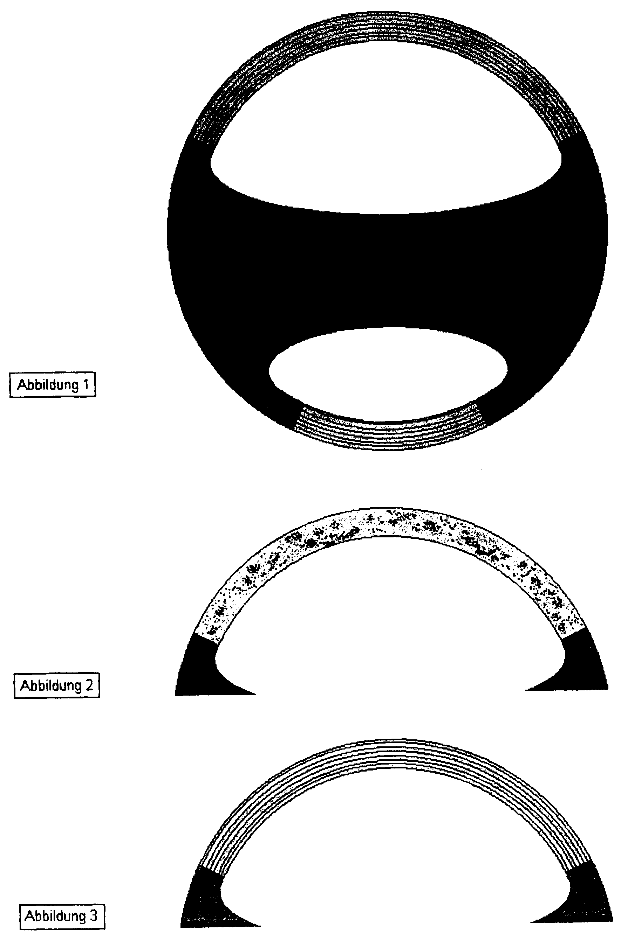

Eine Variante der Ausführung besteht darin, dass die formgefrästen Segmenthälften in einem zwischengeschalteten Arbeitsgang mit Wurzelmaserfurnier von etwa 0,5 mm Dicke überfurniert werden (Abb. 2).

Eine spezielle Ausführungsvariante, welche nur bei diesem Verfahren möglich ist, besteht darin, dass bei der Verleimung der Segmente Lagen von verschiedenfarbigen Holzfurnieren eingebracht werden.

Die Abbildungen 1 und 3 zeigen eine typische Anwendung des erfindungs gemäßen Verfahrens mit leminierten Holz-Segmenten auf dem Lenkrad eines Kraftfahrzeugs.

## Patentansprüche

1. Verfahren zur Herstellung von Lenkrädern mit Holzsegmenten, das folgende Verfahrensschritte umfasst:
a) Verpressen einer vorbestimmten Anzahl von Lagen eines 0,5 bis 2,0 mm dicken Holzfurniers mittels Leimfolie in einer beheizten Stahlform zu einem Segment, welches im Radius auf den Durchmesser des Lenkrades abgestimmt ist,
b) Abschneiden von einzelnen Segmentstreifen mit der jeweils notwendigen Breite von diesem Segment,
c) Fräsen der entsprechenden Profile und Teilen des jeweiligen Segmentstreifens in zwei Segmenthälften,
d) Aufleimen der vorgefertigten Segmenthälften auf das Kernprofil des Lenkrades.

2. Verfahren nach Anspruch 1, wobei die Segmentstreifen vor dem Aufleimen auf das Lenkrad mit einer Lage Wurzelmaserfurnier von ca. 0,5 mm Dicke überfurniert werden.

3. Verfahren nach Anspruch 1, wobei die Segmente aus Lagen von verschiedenfarbigen Holzfurnieren hergestellt werden.

4. Verfahren nach Anspruch 1, 2 oder 3, wobei vor dem Teilen der Segmentstreifen zunächst die Aussenprofile gefräst werden.

## Claims

1. Process for manufacturing steering-wheels with wooden segments, comprising the following process-steps:
a) Laminating a specific number of wood-veneer, 0,5 to 2,0 mm thick, with foil-glue-layers in a heated mold into a segment with a radius corresponding to the radius of the steering-wheel.
b) Cutting segment-strips with a specific width from this segment.
c) Machining into form of these segment-strips and cutting them in halves.
d) Bonding of these half-shell-segments over the steering-wheel-core.

2. Process as per claim 1, whereas a layer of 0,5 mm thick burl-veneer is bonded over the machined segments before applying them to the steering-wheel-core.

3. Process as per claim 1, whereas the segments are laminated from different colored layers of wood-veneer.

4. Process as per claim 1, 2 or 3, whereas the outer profiles are machined before the segments are cut in halves.

## Revendications

1. Procédé de production de volants à segments en bois qui comporte les étapes suivantes:
a) Lamination d'un nombre prédéterminé de couches de placage d'une épaisseur de 0,5 à 2.0 mm au moyen de feuilles de colle dans un moule chauffé afin d'obtenir un segment avec un rayon adapté au diamètre du volant.
b) Découpage en bandes de segments avec la largeur souhaitée.
c) Usinage en bandes de segments individuels avec profile souhaité et découpage en deux moitiés de segment.
d) Collage de moitiés de segments préfabriqués sur le moyeu du volant.

2. Procédé selon revendication 1, en contre-plaquant les bandes de segments avant le collage sur le volant d'une couche de placage type "Loupe" d'une épaisseur d'environ 0.5 mm.

3. Procédé selon revendication 1, en utilisant des couches de placage de différentes couleurs pour les segments.

4. Procédé selon revendications 1,2 ou 3, en usinant des profiles extérieurs avant de découper les bandes de segments.
